Europäisches Patentamt

(19) European Patent Office

Office européen des brevets

(11) EP 0 940 369 A2

(12) EUROPEAN PATENT APPLICATION

(43) Date of publication:
08.09.1999 Bulletin 1999/36

(51) Int. Cl.$^6$: C01G 49/02

(21) Application number: 99301572.6

(22) Date of filing: 02.03.1999

(84) Designated Contracting States:
AT BE CH CY DE DK ES FI FR GB GR IE IT LI LU
MC NL PT SE
Designated Extension States:
AL LT LV MK RO SI

(30) Priority: 02.03.1998 JP 6773798

(71) Applicant: TODA KOGYO CORP.
Hiroshima-shi Hiroshima-ken (JP)

(72) Inventor: Okinaka, Kenji
Ube-shi, Yamaguchi-ken (JP)

(74) Representative:
Woods, Geoffrey Corlett
J.A. KEMP & CO.
Gray's Inn
14 South Square
London WC1R 5LX (GB)

(54) Spindle-shaped goethite particles and process for producing the same

(57) Spindle-shaped goethite particles which uniformly contain:

(i) from 1 to 20 atm % of cobalt, calculated as Co, based on the total amount of Fe;
(ii) from 1 to 15 atm % of aluminum, calculated as Al, based on the total amount of Fe; and which have:
(iii) an X-ray crystallite size ratio ($D_{020}:D_{110}$) of from 1.0:1 to less than 2.0:1;
(iv) an average major axial diameter of from 0.05 to 0.20 $\mu$m;
(v) an average minor axial diameter of from 0.010 to 0.020 $\mu$m; and
(vi) an average aspect ratio (average major axial diameter:average minor axial diameter) of from 4:1 to 10:1.

EP 0 940 369 A2

## Description

The present invention relates to spindle-shaped goethite particles and a process for producing the spindle-shaped goethite particles, and more particularly, to spindle-shaped goethite particles suitable as a starting material of spindle-shaped magnetic iron-based alloy particles which have a large saturation magnetization, an excellent oxidation stability, a high coercive force and a good dispersibility in binder resin, and which are excellent in sheet spareness (Br/Bm) due to the good dispersibility in binder resin, and a process for producing such spindle-shaped goethite particles.

In recent years, with miniaturization, lightening, recording-time prolongation, high density recording and high storage capacity of recording and reproducing apparatuses for audio, video or computers, magnetic recording media such as magnetic tapes and magnetic discs have been increasingly required to have a high performance and a high recording density.

Magnetic recording media have been required to show a high image quality, high output characteristics, and especially improved frequency characteristics. For this reason, it has been demanded to enhance a residual magnetic flux density (Br) and a coercive force of the magnetic recording media.

Consequently, magnetic iron-based alloy particles have attracted attention because such particles can show a higher coercive force and a larger saturation magnetization as compared to those of conventional magnetic iron oxide particles, and have been applied to magnetic recording media such as digital audio tapes (DAT), 8-mm video tapes, Hi-8 tapes, video floppies or W-VHS tapes for Hi-vision. However, it has been strongly demanded to further improve properties of these magnetic iron-based alloy particles.

As to the relationship between various characteristics of the magnetic recording media and properties of the magnetic particles used therefor, in order to achieve high density recording, it is generally required that the magnetic particles are fine particles and have a good particle size distribution.

In order to obtain a high image quality, the magnetic recording media for video are required to have a high coercive force (Hc) and a large residual magnetic flux density (Br). In order to impart such a high coercive force (Hc) and large residual magnetic flux density (Br) to the magnetic recording media, the magnetic particles used therefor are also required to have a coercive force (Hc) as high as possible and a large saturation magnetization.

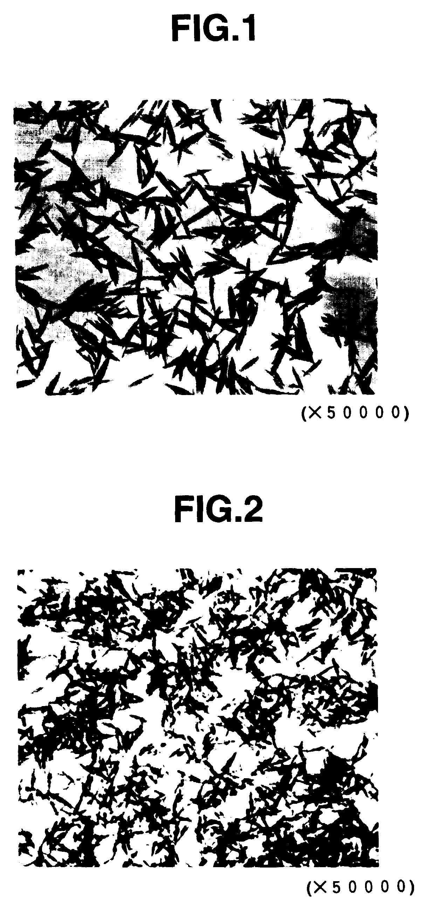

For example, in Japanese Patent Application Laid-Open (KOKAI) No. 63-26821(1988), it is described that "Fig. 1 shows a relationship between a coercive force distribution (switching field distribution) when incorporated into a magnetic coating film (hereinafter sometimes referred to merely as "SFD") measured on the magnetic disc and the reproduction output thereof. · · · · As is apparent from Fig. 1, the characteristic curve representing the relationship between the SFD and the reproduction output becomes linear. Therefore, it is recognized that the reproduction output of the magnetic disc can be increased by using ferromagnetic particles having a small SFD. Namely, in order to obtain a high reproduction output, it is preferred that the SFD is small, and for example, when it is intended to obtain a more reproduction output than ordinary one, the SFD is required to be not more than 0.6." Thus, in order to enhance the reproduction output of magnetic recording media, it is necessary that the SFD (Switching Field Distribution) thereof is small, i.e., the sheet coercive force distribution of the magnetic recording media is narrow. Further, for this purpose, it is required that the magnetic particles used therefor has a good particle size distribution and contain no dendritic particles therein.

As to the magnetic iron-based alloy particles, the finer the particle size thereof becomes, the larger the surface activity thereof becomes, so that the magnetic properties is considerably deteriorated even in air, because such fine particles readily undergo the oxidation reaction by oxygen present in air. As a result, it is not possible to produce magnetic iron-based alloy particles which can show the aimed high coercive force and large saturation magnetization.

In consequence, it has been required to provide magnetic iron-based alloy particles which are excellent in oxidation stability.

As described above, at present, it has been strongly demanded to provide magnetic iron-based alloy particles containing iron as a main particles which are fine particles, contain no dendritic particles, and have a good particle size distribution, a high coercive force, a large saturation magnetization and an excellent oxidation stability.

On the other hand, in the production of magnetic recording media, when the magnetic iron-based alloy particles becomes finer or have a larger saturation magnetization, there tends to be caused such a problem that the particles show a poor dispersibility due to the increase in attraction force between particles or magnetic cohesion force when kneaded and dispersed in a binder resin in an organic solvent. As a result, the magnetic recording media produced therefrom tend to be deteriorated in magnetic characteristics, especially squareness (Br/Bm). Consequently, it have been required that the magnetic iron-based alloy particles are further improved in dispersibility in binder resin.

In general, the magnetic iron-based alloy particles can be produced by using as starting particles, goethite particles, hematite particles obtained by heat-dehydrating the goethite particles, or particles obtained by incorporating different kind of metals other than iron into these particles; heat-treating the starting particles in a non-reducing atmosphere, if necessary; and heat-reducing the thus-treated starting particles in a reducing gas atmosphere.

It is known that the magnetic iron-based alloy particles which are produced by such a method, have a similar shape to that of goethite particles as the starting particles. Therefore, in order to obtain magnetic iron-based alloy particles which can satisfy the above various properties, it is necessary to use goethite particles which are fine particles, have a good particle size distribution and an appropriate particle shape, and contain no dendritic particles. Further, it is required that an appropriate particle shape, a good particle size distribution or the like of the starting goethite particles can be retained even after being subjected to the subsequent heat treatments.

Conventionally, there are known various methods of producing goethite particles as a starting material of the magnetic iron-based alloy particles. Especially, as methods of preliminarily adding compounds of metals such as cobalt which can enhance magnetic properties of finally obtained magnetic iron-based alloy particles, or aluminum which can impart a good shape-retention property and an anti-sintering property to the finally obtained magnetic iron-based alloy particles, during the production of goethite particles, there are known, for example, (i) a method of producing spindle-shaped goethite particles by passing an oxygen-containing gas through a suspension containing $FeCO_3$ obtained by reacting an aqueous ferrous salt solution to which an acid salt compound of aluminum is added, with an aqueous alkali carbonate solution to which a basic salt compound of aluminum is added, so as to conduct the oxidation reaction (Japanese Patent Application Laid-Open (KOKAI) No. 6-228614(1994)); (ii) a method of producing spindle-shaped goethite particles wherein a cobalt compound is caused to exist in raw materials in advance, and a compound containing specific elements is added in a total amount of 0.1 to 5.0 mol% (calculated as respective elements), to the solution in which the oxidation reaction proceeds up to 50 to 90 % (Japanese Patent Application Laid-Open (KOKAI) No. 7-126704(1995)); (iii) a method of preliminarily adding Si, a rare earth element or the like during the production of goethite particles and then adding a cobalt compound, and further adding an aluminum compound in the course of the oxidation reaction (Japanese Patent Application Laid-Open (KOKAI) Nos. 8-165501(1996) and 8-165117(1996)); and (iv) a method of producing spindle-shaped goethite particles by two-stage production reaction which comprises producing spindle-shaped goethite seed crystal particles and then growing a goethite layer on the surface of each goethite seed crystal particle, wherein a cobalt compound is caused to exist in the seed crystal particles, and an aluminum compound is added upon the growth reaction (Japanese Patent Application Laid-Open (KOKAI) No. 9-295814(1997)).

Meanwhile, in the above-mentioned Japanese KOKAIs, there have also been described magnetic iron-based alloy particles which are produced from goethite particles as a starting material.

As a starting material of magnetic spindle-shaped metal particles which can show a high coercive force, a large saturation magnetization and an excellent oxidation stability, and which are excellent in sheet squareness (Br/Bm) due to a good dispersibility in binder resin, there has been demanded such spindle-shaped goethite particles which are composed of fine particles and show a good particle size distribution.

However, in the case where the goethite particles described in the above-mentioned Japanese KOKAIs are used as the starting material, there cannot be obtained magnetic iron-based alloy particles capable of satisfying these requirements.

That is, in the production process described in Japanese Patent Application Laid-Open (KOKAI) No. 6-228614(1994), goethite particles which are free from inclusion of dendritic particles and have a uniform particle size, are produced by appropriately controlling the addition of aluminum. However, since the surface of the goethite particle is coated with a cobalt compound, it is difficult to obtain a large saturation magnetization and a high coercive force.

In the production process described in Japanese Patent Application Laid-Open (KOKAI) No. 7-126704(1995), the cobalt compound is added to the raw material, and further the aluminum compound is added in the course of the oxidation reaction. However, it is difficult to obtain magnetic iron-based alloy particles which show a high coercive force, a large saturation magnetization and an excellent oxidation stability.

In the production processes described in Japanese Patent Application Laid-Open (KOKAI) Nos. 8-165501(1996) and 8-165117(1996), since the aluminum compound is added in the course of the oxidation reaction, the obtained goethite particles are ultrafine particles.

In the production process described in Japanese Patent Application Laid-Open (KOKAI) No. 9-295814(1997), since the goethite particles are produced by two-stage reaction, cobalt and aluminum are separately contained in the seed crystal portion and the surface layer portion of the obtained goethite particles, respectively.

Further, the magnetic iron-based alloy particles which are produced by using as a starting material, the goethite particles obtained by the processes described in the above Japanese KOKAIs, cannot be said to be fine particles which show a good particle size distribution, contain no dendritic particles, have a high coercive force, a large saturation magnetization and an excellent oxidation stability, and are excellent in sheet squareness (Br/Bm) due to a good dispersibility in a binder resin.

In consequence, it has been demanded to provide spindle-shaped goethite particles which are fine particles and free from inclusion of dendritic particles, and have a good particle size distribution and an appropriate particle shape, and which can be suitably used as a starting material of spindle-shaped magnetic iron-based alloy particles which can show a high coercive force, a large saturation magnetization and an excellent oxidation stability, and are excellent in sheet squareness (Br/Bm) due to a good dispersibility in a binder resin.

As a result of the present inventors' earnest studies for solving the above problems, it has been found that by using as a starting material, spindle-shaped goethite particles produced by such a process comprising the steps of obtaining a water suspension containing a ferrous iron-containing precipitate produced by reacting a mixed aqueous alkali solution comprising an aqueous alkali carbonate solution and an aqueous alkali hydroxide solution, with an aqueous ferrous salt solution; aging the water suspension containing the ferrous iron-containing precipitate for 30 to 300 minutes in a non-oxidative atmosphere; and passing an oxygen-containing gas through the aged water suspension so as to conduct the oxidation reaction,

wherein an aluminum compound is added in an amount of 1 to 15 atm % (calculated as Al) based on whole Fe in the water suspension, either to the aqueous ferrous salt solution in case of using as an aluminum compound a normal salt of aluminum, or to the mixed aqueous alkali solution in case of using an aluminum compound an aluminate; and
immediately after the passage of the aging period, cobalt is added in an amount of 1 to 20 atm % (calculated as Co) based on whole Fe in the water suspension, to the water suspension containing the ferrous iron-containing precipitate,
there can be obtained spindle-shaped magnetic iron-based alloy particles which can show a high coercive force, a large saturation magnetization and an excellent oxidation stability, and are excellent in sheet squareness (Br/Bm) due to a good dispersibility in a binder resin. The present invention has been attained on the basis of the finding.

It is an object of the present invention to provide spindle-shaped goethite particles suitable as a starting material of spindle-shaped magnetic iron-based alloy particles which can show a high coercive force, a large saturation magnetization and an excellent oxidation stability, and are excellent in sheet squareness (Br/Bm) due to a good dispersibility in a binder resin.

To accomplish the aims, in a first aspect of the present invention, there are provided spindle-shaped goethite particles uniformly containing cobalt of 1 to 20 atm % (calculated as Co) based on whole Fe and aluminum of 1 to 15 atm % (calculated as Al) based on whole Fe, and having an X-ray crystallite size ratio ($D_{020}/D_{110}$) of not less than 1.0 and less than 2.0, an average major axial diameter of 0.05 to 0.20 $\mu$m, an average minor axial diameter of 0.010 to 0.020 $\mu$m and an average aspect ratio (average major axial diameter:average minor axial diameter) of 4:1 to 10:1.

In a second aspect of the present invention, there is provided a process for producing spindle-shaped goethite particles, comprising:

aging a water suspension containing a ferrous iron-containing precipitate obtained by reacting a mixed aqueous alkali solution comprising an aqueous alkali carbonate solution and an aqueous alkali hydroxide solution, with an aqueous ferrous salt solution, for 30 to 300 minutes in a non-oxidative atmosphere; and
passing an oxygen-containing gas through the aged water suspension so as to conduct the oxidation reaction, thereby obtaining spindle-shaped goethite particles,
an aluminum compound being added in an amount of 1 to 15 atm %, calculated as Al, based on whole Fe in the water suspension, either to the aqueous ferrous salt solution when a normal salt of aluminum is used as the aluminum compound, or to the mixed aqueous alkali solution when an aluminate is used as the aluminum compound; and immediately after the passage of the aging period, a cobalt compound being added in an amount of 1 to 20 atm %, calculated as Co, based on whole Fe in the water suspension, to the water suspension containing the ferrous iron-containing precipitate.

In the accompanying drawings:

Fig. 1 is a transmission electron micrograph (x 50,000) showing a particle shape of spindle-shaped goethite particles obtained in Example 1 according to the present invention.
Fig. 2 is a transmission electron micrograph (x 50,000) showing a particle shape of spindle-shaped magnetic iron-based alloy particles which were obtained in Reference Example 1 according to the present invention.
Fig. 3 is a transmission electron micrograph (x 50,000) showing a particle shape of spindle-shaped goethite particles obtained in Example 3 according to the present invention.
Fig. 4 is a transmission electron micrograph (x 50,000) showing a particle shape of spindle-shaped goethite particles obtained in Comparative Example 3.
Fig. 5 is a transmission electron micrograph (x 50,000) showing a particle shape of spindle-shaped goethite particles obtained in Comparative Example 4.
Fig. 6 is a transmission electron micrograph (x 50,000) showing a particle shape of spindle-shaped goethite particles obtained in Comparative Example 6.
Fig. 7 is a transmission electron micrograph (x 50,000) showing a particle shape of spindle-shaped magnetic iron-based alloy particles which were obtained in Reference Example 3 according to the present invention.

Fig. 8 is a transmission electron micrograph (x 50,000) showing a particle shape of spindle-shaped magnetic iron-based alloy particles which were obtained in Reference Example 4.

The present invention is described in detail below.

First, the spindle-shaped goethite particles according to the present invention are explained.

The shape of the spindle-shaped goethite particles according to the present invention is spindle-like.

The spindle-shaped goethite particles according to the present invention, have an average major axial diameter of usually 0.05 to 0.20 μm, preferably 0.05 to 0.18 μm, a particle size distribution (standard deviation/average major axial diameter) of usually not more than 0.21, preferably not more than 0.20, more preferably 0.01 to 0.20, an average minor axial diameter of usually 0.01 to 0.020 μm, preferably 0.010 to 0.018 μm, and an aspect ratio (average major axial diameter:average minor axial diameter) of usually 4:1 to 10:1, preferably 5:1 to 9:1.

The BET specific surface area of the spindle-shaped goethite particles according to the present invention, is usually 80 to 200 $m^2$/g, preferably 90 to 190 $m^2$/g.

The spindle-shaped goethite particles according to the present invention, uniformly contain aluminum in an amount of usually 1 to 15 atm %, preferably 3 to 15 atm % (calculated as Al) based on whole Fe. The aluminum exists in the form of a uniform solid solution in the goethite particles.

The spindle-shaped goethite particles according to the present invention, uniformly contain cobalt in an amount of usually 1 to 20 atm %, preferably 1 to 18 atm %, more preferably 3 to 18 atm % (calculated as Co) based on whole Fe. The cobalt exists in the form of a uniform solid solution in the goethite particles.

The total content of cobalt and aluminum in the spindle-shaped goethite particles, is usually 2 to 23 atm %, preferably 6 to 21 atm % (calculated as a sum of Co and Al) based on whole Fe. When the total content of cobalt and aluminum is more than 23 atm %, fine impurities tend to be caused.

It is preferred that the cobalt content is not less than the aluminum content.

The X-ray crystallite size ratio ($D_{020}:D_{110}$) of the spindle-shaped goethite particles according to the present invention, is usually not less than 1.0:1 and less than 2.0:1, preferably 1.0:1 to 1.9:1, more preferably 1.2:1 to 1.8:1.

When the X-ray crystallite size ratio is less than 1.0:1, the magnetic iron-based alloy particles which are produced by heat-dehydrating the goethite particles, may not show a high coercive force. Next, the process for producing the spindle-shaped goethite particles according to the present invention is described.

In the process according to the present invention, the aging of the water suspension is preferably conducted at a temperature of usually 40 to 80°C in a non-oxidative atmosphere. When the temperature is less than 40°C, the obtained goethite particles may have a small aspect ratio, so that the aging effect may not be sufficiently exhibited. On the other hand, when the temperature is more than 80°C, magnetite tends to be contained in the obtained goethite particles. The aging time is 30 to 300 minutes. When the aging time is less than 30 minutes, it may become to insufficiently increase the aspect ratio of the goethite particles. The aging time can be more than 300 minutes, but such an unnecessarily long aging time is meaningless.

The non-oxidative atmosphere used in the present invention can be obtained by passing an inert gas such as a nitrogen gas, or a reducing gas such as a hydrogen gas, through a reactor into which the water suspension is accommodated.

In the present invention, as the aqueous ferrous salt solution, there may be used an aqueous ferrous sulfate solution, an aqueous ferrous chloride solution or the like.

The mixed aqueous alkali solution used in the present invention, can be obtained by mixing an aqueous alkali carbonate solution with an aqueous alkali hydroxide solution. As to the mixing ratio (expressed by % calculated as normality), the amount of the aqueous alkali hydroxide solution mixed is usually 10 to 40 % (% calculated as normality), preferably 15 to 35 % (% calculated as normality). When the amount of the aqueous alkali hydroxide solution mixed is less than 10 %, the aspect ratio of the obtained goethite particles may not be unsatisfactorily increased. On the other hand, when the amount of the aqueous alkali hydroxide solution mixed is more than 40 %, granular magnetite tends to be contained in the obtained goethite particles.

As the aqueous alkali carbonate solutions, there may be used an aqueous sodium carbonate solution, an aqueous potassium carbonate solution, an aqueous ammonium carbonate solution, or the like. As the aqueous alkali hydroxide solutions, there may be used an aqueous sodium hydroxide solution, an aqueous potassium hydroxide solution, or the like.

The equivalent ratio of the mixed aqueous alkali solution to whole Fe in the aqueous ferrous salt solution is usually 1.3:1 to 3.5:1, preferably 1.5:1 to 2.5:1. When the equivalent ratio of the mixed aqueous alkali solution to whole Fe is less than 1.3;1, magnetite particles tend to be contained in the obtained goethite particles. On the other hand, when the equivalent ratio is more than 3.5:1, such a large amount of the mixed aqueous alkali solution may be disadvantageous from the industrial viewpoint.

The ferrous iron concentration after mixing the aqueous ferrous salt solution with the mixed aqueous alkali solution, is usually 0.1 to 1.0 mol/liter, preferably 0.2 to 0.8 mol/liter. When the ferrous iron concentration is less than 0.1 mol/liter, the yield of goethite particles may become low, which is disadvantageous from the industrial viewpoint. On the other hand, when the ferrous iron concentration is more than 1.0 mol/liter, the particle size distribution of the obtained goethite particles may become disadvantageously large.

The pH value in the production reaction of the spindle-shaped goethite particles, is usually 8.0 to 11.5, preferably 8.5 to 11.0. When the pH value is less than 8.0, a large amount of acid radicals tend to be contained in the obtained goethite particles. Since such acid radicals cannot be simply removed by washing, the sintering between particles may be caused when magnetic iron-based alloy particles are produced from these goethite particles. On the other hand, when the pH value is more than 11.5, there may not be obtained magnetic iron-based alloy particles having the aimed high coercive force.

The oxidation reaction of the present invention may be conducted by passing an oxygen-containing gas (e.g., air) through the solution.

The linear velocity of the oxygen-containing gas passed is usually 0.5 to 3.5 cm/sec, preferably 1.0 to 3.0 cm/sec.

Incidentally, the linear velocity means an amount of the oxygen-containing gas passed per a unit sectional area (a bottom sectional area of a column reactor, and the diameter and number of pores of a nest plate are not taken into consideration), and is expressed by a unit of cm/sec.

The production reaction of the spindle-shaped goethite particles according to the present invention, may be conducted at a temperature of usually not more than 80°C at which goethite particles are produced. When the temperature is more than 80°C, magnetite particles tend to be contained in the obtained spindle-shaped goethite particles. The temperature is preferably 45 to 55°C.

In the present invention, as the aluminum compounds, there may be used normal salts of aluminum such as aluminum sulfate, aluminum chloride or aluminum nitrate; or aluminates such as sodium aluminate, potassium aluminate or ammonium aluminate, or the like.

Among these aluminum compounds, the normal salts of aluminum may be added to the aqueous ferrous salt solution, while the aluminates may be added to the mixed aqueous alkali solution.

Conversely, in the case where the normal salts of aluminum are added to the mixed aqueous alkali solution or the aluminates are added to the aqueous ferrous salt solution, water-insoluble precipitates of aluminum are disadvantageously produced, so that it is not possible to obtain a goethite single phase.

In the case where the aluminum compound is added before or during the aging treatment, fine impurities tend to be incorporated in the goethite particles. Further, in the case where the aluminum compound is added immediately after the passage of the aging period, the obtained goethite particles tend to become ultrafine particles.

In addition, when the aluminum compound is added dividedly, continuously or intermittently, the effect of the present invention cannot be sufficiently exhibited.

The amount of the aluminum compound added is 1 to 15 atm %, preferably 3 to 15 atm %, more preferably 6 to 12 atm % (calculated as Al) based on whole Fe in the spindle-shaped goethite particles as a final product. When the amount of the aluminum compound added is less than 1 atm %, the anti-sintering effect may not be obtained. On the other hand, when the amount of the aluminum compound added is more than 15 atm %, particles other than goethite particles may be produced, so that the magnetic properties of the obtained particles, especially saturation magnetization, may be deteriorated.

In the present invention, as the cobalt compounds, there may be used cobalt sulfate, cobalt chloride, cobalt nitrate or the like.

The cobalt compound may be added to the water suspension containing the ferrous iron-containing precipitate immediately after the passage of the aging period. Here, the term of "immediately after the passage of the aging period" means "immediately before the initiation of the oxidation reaction".

In the case where the cobalt compound is added at the time other than "immediately after the passage of the aging period", for example, in the case where the cobalt compound is added to the aqueous ferrous salt solution, the obtained particles become coarse and is deteriorated in aspect ratio thereof. In the case where the cobalt compound is added to the mixed aqueous alkali solution, plate-like particles are disadvantageously incorporated in the obtained particles. In the case where the cobalt compound is added before or during the aging treatment, fine impurities are disadvantageously incorporated in the obtained particles. Further, in the case where the cobalt compound is added during the oxidation reaction, granular particles are disadvantageously incorporated in the obtained particles.

The amount of the cobalt compound added is 1 to 20 atm %, preferably 1 to 18 atm %, more preferably 1 to 15 atm % (calculated as Co) based on whole Fe. When the amount of the cobalt compound added is less than 1 atm %, the effect of improving magnetic properties of the finally produced magnetic iron-based alloy particles may not be exhibited.

The total amount of the cobalt and aluminum compounds added, is preferably 2 to 23 atm % (calculated as a sum of Co and Al) based on whole Fe. When the total amount of the cobalt and aluminum compounds added is more than 23 atm %, fine impurities may tend to be incorporated in the obtained particles.

6

Next, the process for producing the spindle-shaped magnetic iron-based alloy particles which are produced by using as a starting material, the spindle-shaped goethite particles according to the present invention, will be described.

The spindle-shaped magnetic iron-based alloy particles may be produced either by treating the spindle-shaped goethite particles according to the present invention, with an anti-sintering agent, and then directly heat-reducing the thus-treated goethite particles, or by heat-treating the spindle-shaped goethite particles according to the present invention, and then heat-reducing the thus obtained spindle-shaped hematite particles.

Further, the spindle-shaped magnetic iron-based alloy particles may also be produced by continuously subjecting the spindle-shaped goethite particles treated with the anti-sintering agent, to heat-treatment in a non-reducing atmosphere and then a heat-reduction in a reducing atmosphere.

As the anti-sintering agents with which the spindle-shaped goethite particles according to the present invention are treated, there may be preferably used rare earth compounds.

As the suitable rare earth compounds, there may be exemplified one or more compounds each containing at least one rare earth element selected from the group consisting of scandium, yttrium, lanthanum, cerium, praseodymium, neodymium, samarium and the like. Examples of the rare earth compounds may include chlorides, sulfates, nitrates, etc., of the above-mentioned rare earth elements. As the method of coating the goethite particles with the rare earth compounds, there may be used either a dry-coating method or a wet-coating method. Among them, the wet-coating method is preferable.

The amount of the rare earth compound used is preferably 1 to 15 atm %, more preferably 3 to 12 atm % (calculated as rare earth element) based on whole Fe in the spindle-shaped goethite particles. When the amount of the rare earth compound used is less than 1 atm %, a sufficient anti-sintering effect may not be obtained, so that when magnetic iron-based alloy particles may be produced from such particles, a high coercive force may not be obtained, and as a result, the sheet SFD thereof may be deteriorated. On the other hand, when the amount of the rare earth compound used is more than 15 atm %, the saturation magnetization of the obtained particles may become low.

Incidentally, in order to enhance the anti-sintering effect or control the magnetic properties, there may be used one or more compounds containing at least one other element selected from the group consisting of Al, Si, B, Ca, Mg, Ba, Sr, Co, Ni, Cu and the like, if necessary. These compounds not only can exhibit the anti-sintering effect or control the magnetic properties, but also can control the reduction velocity according to the kind of element contained therein. Therefore, these compounds may be used in combination depending upon requirements. The amount of the compounds containing at least one other element selected from the group consisting of Al, Si, B, Ca, Mg, Ba, Sr, Co, Ni, Cu and the like is preferably 1 to 25 atm %, more preferably 1 to 20 atm % (calculated as other element) based on whole Fe in the spindle-shaped goethite particles.

In such a case, the total amount of the rare earth compounds as the anti-sintering agent and the compounds containing at least one other element selected from the group consisting of Al, Si, B, Ca, Mg, Ba, Sr, Co, Ni, Cu and the like is preferably 1 to 40 atm % (calculated as the sum of respective elements) based on whole Fe in the spindle-shaped goethite particles. When the total amount is too small, a sufficient anti-sintering effect may not be obtained. On the other hand, when the total amount is too large, the saturation magnetization of the finally obtained magnetic iron-based alloy particles may be deteriorated. Accordingly, the amounts of the rare earth compounds and the compounds containing the other elements may be appropriately selected according to the combination thereof so as to obtain an optimum effect.

By preliminarily coating the spindle-shaped goethite particles with the anti-sintering agent or the like, there can be obtained spindle-shaped hematite particles which can be prevented from undergoing the sintering therewithin or therebetween, and can successively maintain a particle shape and aspect ratio of the spindle-shaped goethite particles, resulting in facilitating the production of independent magnetic iron-based alloy particles which can well maintain the particle shape and the like of the starting goethite particles.

The spindle-shaped hematite particles can be produced by heat-treating the spindle-shaped goethite particles coated with the anti-sintering agent, at a temperature of 400 to 850°C in a non-reducing atmosphere.

The thus-obtained hematite particles may be washed after the heat-treatment to remove impurity salts such as $Na_2SO_4$ therefrom. In this case, the washing of the hematite particles is preferably conducted under such a condition that no anti-sintering agent applied on the particles is eluted out and only unnecessary impurity salts can be removed therefrom.

More specifically, in order to effectively remove cationic impurities, the pH value of the wash water is increased, while in order to effectively remove anionic impurities, the pH value of the wash water is decreased.

The aimed spindle-shaped magnetic iron-based alloy particles may be produced by directly reducing the spindle-shaped goethite particles coated with the anti-sintering agent according to the present invention. However, in order to attain well-controlled magnetic properties, particle properties and particle shape, it is preferred that the spindle-shape goethite particles coated with the anti-sintering agent are preliminarily heat-treated in the non-reducing atmosphere by an ordinary method in advance of the heat-reduction treatment.

The non-reducing atmosphere may be formed by a gas flow or a gas stream composed of at least one gas selected from the group consisting of air, an oxygen gas, a nitrogen gas and the like. The heat-treatment temperature may be in the range of 400 to 850°C, and it is preferred that the heat-treatment temperature is appropriately selected depending upon kinds of compounds used for coating the spindle-shaped goethite particles. When the heat-treatment temperature is more than 850°C, deformation of particles or sintering within or between particles tends to be disadvantageously caused.

The heat-reducing temperature is preferably 400 to 700°C. When the heat-reducing temperature is less than 400°C, the reduction reaction proceeds too slowly, so that the process time may be disadvantageously prolonged. On the other hand, when the heat-reducing temperature is more than 700°C, the reduction reaction proceeds too rapidly, so that there tend to be caused disadvantages such as deformation of particles or sintering within or between particles.

The spindle-shaped magnetic iron-based alloy particles which are obtained after the heat-reduction, may be taken out in air by known methods, e.g., by (i) a method of immersing in an organic solvent such as toluene; (ii) a method of replacing the atmosphere for the spindle-shaped magnetic iron-based alloy particles which are produced after the heat-reduction, with an inert gas, and then gradually increasing an oxygen content in the atmosphere until the atmosphere is finally replaced with air; (iii) a method of gradually conducting the oxidation using a mixed gas composed of oxygen and steam; or the like.

Next, the spindle-shaped magnetic iron-based alloy particles which are produced by using as a starting material, the spindle-shaped goethite particles according to the present invention, are described.

The shape of the spindle-shaped magnetic iron-based alloy particles, is spindle-like.

The spindle-shaped magnetic iron-based alloy particles, have an average major axial diameter of usually 0.05 to 0.18 $\mu$m, preferably 0.05 to 0.16 $\mu$m, a particle size distribution (standard deviation/average major axial diameter) of usually not more than 0.20, preferably 0.01 to 0.19, an average minor axial diameter of usually 0.010 to 0.020 $\mu$m, preferably 0.010 to 0.018 $\mu$m, and an aspect ratio (average major axial diameter:average minor axial diameter) of usually 4:1 to 9:1, preferably 5:1 to 8.5:1.

The BET specific surface area of the spindle-shaped magnetic iron-based alloy particles, is usually 35 to 65 $m^2$/g, preferably 40 to 60 $m^2$/g.

The spindle-shaped magnetic iron-based alloy particles, may contain aluminum in an amount of usually 1 to 15 atm %, preferably 3 to 15 atm %, more preferably 6 to 12 atm % (calculated as Al) based on whole Fe; cobalt in an amount of usually 1 to 20 atm %, preferably 1 to 18 atm %, more preferably 3 to 18 atm % (calculated as Co) based on whole Fe; and a rare earth element in an amount of usually 1 to 15 atm %, preferably 3 to 12 atm % (calculated as rare earth element) based on whole Fe.

The spindle-shaped magnetic iron-based alloy particles, further have a coercive force of usually 1,800 to 2,500 Oe, preferably 1,900 to 2,500 Oe, and a saturation magnetization $\sigma$s of usually 110 to 160 emu/g, preferably 120 to 160 emu/g.

The X-ray crystallite size $D_{110}$ of the spindle-shaped magnetic iron-based alloy particles, is usually 12.0 to 18.0 nm, preferably 13.0 to 17.0 nm.

The spindle-shaped magnetic iron-based alloy particles, further have a change ($\triangle\sigma$s) in saturation magnetization ($\sigma$s) with passage of time of usually not more than 10 %, preferably not more than 5 % (as absolute value) after being subjected to an accelerated deterioration test for one week at a temperature of 60°C and a relative humidity of 90 %.

The spindle-shaped magnetic iron-based alloy particles, further have good sheet characteristics, more specifically a sheet squareness (Br/Bm) of usually not less than 0.85, preferably not less than 0.86; a sheet SFD (sheet coercive force distribution) of usually not more than 0.42, preferably not more than 0.40; and a change ($\triangle$Bm) in saturation magnetic flux density (Bm) with time of usually not more than 8 %, preferably not more than 5 % (as an absolute value).

Hitherto, in order to improve a particle shape or the like of the goethite particles used as a starting material of the magnetic iron-based alloy particles, it has been attempted to add salts of various metals thereto. Among these metals, cobalt can act to form a solid solution with Fe in the magnetic iron-based alloy particles produced and, therefore, can enhance the magnetizability and the coercive force Hc thereof, thereby also contributing to enhancement of the oxidation stability. In addition, aluminum can impart an anti-sintering property to the magnetic iron-based alloy particles produced, and further can impart thereto an excellent shape-retention property and enhance a dispersibility in a binder resin having sodium sulfonate functional groups which has been ordinarily used in the production of magnetic recording media containing magnetic iron-based alloy particles.

Further, in the production reaction of goethite particles, in the case where cobalt is allowed to form a solid solution by using alkali carbonate and alkali hydroxide in combination, there can be obtained fine goethite particles which have a small minor axial diameter and, therefore, show an appropriately large aspect ratio. Also, aluminum can exhibit the effect of controlling a crystal growth, so that considerably different aspect ratios are obtained by varying the timing of addition of aluminum or the amount of aluminum added.

In order to obtain spindle-shaped goethite particles in which cobalt and aluminum form a uniform solid solution, without deterioration of aspect ratio thereof, the timing of addition of cobalt and aluminum may be controlled as follows.

That is, by adding the aluminum compound to either the aqueous ferrous salt solution or the mixed aqueous alkali solution as raw materials, and immediately after the passage of the aging period, adding the cobalt compound to the aged water suspension containing a ferrous iron-containing precipitate, there can be obtained spindle-shaped goethite particles which can be prevented from being deteriorated in aspect ratio even when a large amount of aluminum is added, are composed of fine particles, exhibit an appropriate aspect ratio and an excellent particle size distribution, and contain an effectively large amount of cobalt and aluminum.

The reason why the spindle-shaped goethite particles in which cobalt and aluminum form a uniform solid solution, can be produced without deterioration of aspect ratio thereof, is considered as follows. That is, the initially added aluminum compound is considered to act for producing coarse goethite particles or accelerating crystal growth in the minor axial direction due to the increase in viscosity caused by adding the aluminum compound. However, it is considered that by adding the cobalt compound immediately after the passage of the aging period, the increase in viscosity due to the addition of the aluminum compound can be effectively inhibited, so that the obtained goethite particles can have a reduced particle size, and the effect of preventing crystal growth in the minor axial direction can be obtained, thereby producing spindle-shaped goethite particles having an optimum aspect ratio and containing cobalt and aluminum in the from of a uniform solid solution.

In the case where the cobalt compound is added at the time other than immediately after the passage of the aging period, for example, in the case where the cobalt compound is added during the aging period, both cobalt and aluminum exist simultaneously during the aging treatment, and fine impurities other than goethite particles are incorporated as shown in Comparative Example 6 hereinafter, so that it is not possible to produce a goethite single phase.

Meanwhile, since the spindle-shaped goethite particles according to the present invention, have a specific X-ray crystallite size ratio ($D_{020}:D_{110}$) and contain cobalt and aluminum in the form of a uniform solid solution, the spindle-shaped magnetic iron-based alloy particles which are produced by heat-reducing such the goethite particles as a starting material, can show an excellent particle size distribution, are free from inclusion of dendritic particles, and can have appropriate particle shape and aspect ratio, a high coercive force, a large saturation magnetization and an excellent oxidation stability. Further, in the case where the spindle-shaped magnetic iron-based alloy particles and the binder resin having sodium sulfonate functional groups are used together to form a sheet such as a magnetic coating film, it is possible to obtain a good sheet squareness (Br/Bm) and a good SFD (coercive force distribution).

Thus, the spindle-shaped goethite particles according to the present invention, are fine particles, have a good particle size distribution, contain no dendritic particles, and exhibit an appropriate particle shape. Therefore, by heat-reducing such goethite particles as a starting material, there can be obtained spindle-shaped magnetic iron-based alloy particles which are fine particles, can show an excellent particle size distribution, contain no dendritic particles, and can exhibit an appropriate particle shape, a high coercive force, a large saturation magnetization, an excellent oxidation stability and a good sheet squareness (Br/Bm) due to a good dispersibility in a binder resin. Accordingly, the spindle-shaped magnetic iron-based alloy particles which are produced from the spindle-shaped goethite particles according to the present invention, are suitable as magnetic particles for attaining high recording density, high sensitivity and high output.

EXAMPLES

The present invention will now be described in more detail with reference to the following examples, but the present invention is not restricted to those examples and various modifications are possible within the scope of the invention.

(1) The average major axial diameter and the aspect ratio of particles were respectively expressed by the average of values measured from electron micrographs.

(2) The BET specific surface area of particles was expressed by the values measured by a BET method using "Monosorb MS-11" (manufactured by Cantachrom Co., Ltd.).

(3) The size distribution of the particles is expressed by the ratio of a standard deviation to the average major axis diameter.
The major axis diameters of 300 particles in an electron microphotograph ($\times$ 200,000 magnification) were measured. The actual major axial diameters and the number of the particles were obtained from the calculation on the basis of the measured values.
The standard deviation (s) was obtained by the following equation.

$$S = \sqrt{\sum_{i=1}^{n}(x_1 - \bar{x})^2/n}$$

wherein $x_1$ $x_2$, , $x_n$ represent the determined major axis diameter of the each specimen, $\bar{x}$ represents an average major axis diameter determined of the each specimen.

(4) The X-ray crystallite size ($D_{020}$ and $D_{110}$ of spindle-shaped goethite particles or $D_{110}$ of spindle-shaped magnetic iron-based alloy particles) was expressed by the value of thickness of crystallite in the direction perpendicular to each of the crystal planes (020) and (110) of the spindle-shaped goethite particles or the crystal plane (110) of the spindle-shaped magnetic iron-based alloy particles which was measured by an X-ray diffraction method using "X-ray diffractometer" (manufactured by Rigaku Denki Kogyo Co., Ltd.) (measuring conditions: target: Fe; tube voltage: 40 kV; and tube current: 40 mA), respectively. The value was calculated from the X-ray diffraction peak curve obtained with respect to the respective crystal planes by using the following Scherrer's formula:

$$D_{110} \text{ or } D_{020} = K\lambda/\beta\cos\theta$$

wherein $\beta$ is a true half-width (unit: radian) of the diffraction peak which was corrected with respect to the width of machine used; K is a Scherrer constant (0.9); $\lambda$ is a wavelength of X-ray (Fe K$\alpha$-ray 0.1935 nm); and $\theta$ is a diffraction angle (corresponding to a diffraction peak of the crystal plane (110) and (020)).

(5) The magnetic properties of magnetic iron-based alloy particles, were measured using a vibration sample magnetometer "VSM-3S-15" (manufactured by Toei Kogyo Co., Ltd.) by applying an external magnetic field of 10 kOe.

(6) The contents of Co, Al, rare earth elements and other metal elements in the spindle-shaped goethite particles or the spindle-shaped magnetic iron-based alloy particles, were measured by using an inductively coupled plasma atomic emission spectroscope "SPS4000" (manufactured by Seiko Denshi Kogyo Co., Ltd.).

(7) The sheet magnetic characteristics were measured by using a sheet test specimen prepared by the following method.

The respective components as shown below were charged into a 100-cc plastic bottle, and then mixed and dispersed together for 8 hours using a paint shaker (manufactured by Reddevil Co., Ltd.), thereby preparing a magnetic coating material. The thus-prepared magnetic coating material was applied on a 25 $\mu$m-thick polyethylene telephthalate film using an applicator, and then dried in a magnetic field of 5 kGauss, thereby obtaining the sheet test specimen on which a magnetic coating layer having a thickness of 50 $\mu$m was formed.

Composition of magnetic coating material

| 3 mm$\phi$ steel balls | 800 parts by weight |
|---|---|
| Spindle-shaped magnetic iron-based alloy particles | 100 parts by weight |
| Polyurethane resin having sodium sulfonate groups | 20 parts by weight |
| Cyclohexanone | 83.3 parts by weight |
| Methyl ethyl ketone | 83.3 parts by weight |
| Toluene | 83.3 parts by weight |

The magnetic properties of the thus-prepared sheet test specimen were measured by the following method.
The $\triangle\sigma$s for evaluating an oxidation stability of the saturation magnetization $\sigma$s of particles, and the $\Delta$Bm for evaluating an oxidation stability of the sheet saturation magnetic flux density Bm, were measured as follows.
The test particles or the sheet test specimen were placed in a constant-temperature oven maintained at 60°C and a relative humidity of 90 %, and allowed to stand therein for one week to conduct an accelerated deterioration test.

Thereafter, the test particles and the sheet test specimen were measured with respect to the saturation magnetization and the sheet saturation magnetic flux density, respectively. The differences $\Delta\sigma s$ and $\Delta Bm$ (as an absolute value), were respectively calculated from the values $\sigma s$ and $Bm$ measured before the accelerated test and the values $\sigma s'$ and $Bm'$ measured after the one-week accelerated deterioration test.

Example 1:

30 liters of a mixed aqueous alkali solution containing sodium carbonate in amounts of 25 mol and sodium hydroxide in amounts of 18 mol (the concentration of sodium hydroxide being equivalent to 26.5 mol % (calculated as normality) based on mixed alkali) were charged into a bubble tower and the temperature thereof was adjusted to 47°C while passing a nitrogen gas through the bubble tower at a linear velocity of 2.21 cm/s. Then, 20 liters of an aqueous ferrous sulfate solution containing 20 mol of $Fe^{2+}$ (the concentration of the mixed aqueous alkali solution being equal to 1.7 equivalents (calculated as normality) based on the ferrous sulfate) to which an aqueous aluminum sulfate solution containing 2.0 mol of $Al^{3+}$ (equivalent to 10 atm % (calculated as Al) based on whole Fe) had been preliminarily added, were charged into the bubble tower and the contents of the bubble tower were aged therein for 300 minutes. Thereafter, 2 liters of an aqueous cobalt sulfate solution containing 2.0 mol of $Co^{2+}$ (equivalent to 10 atm % (calculated as Co) based on whole Fe) was added to the bubble tower. After air was passed through the bubble tower at a linear velocity of 1.99 cm/sec to conduct the oxidation reaction, the resultant reaction mixture was washed with water using a filter press until the electric conductivity reached 60 $\mu S$, thereby obtaining a press cake.

A part of the obtained press cake was dried and pulverized by an ordinary method, thereby obtaining goethite particles. As recognized from the transmission electron micrograph shown in Fig. 1, the obtained goethite particles were of a spindle shape, and had a BET specific surface area of 110.5 $m^2/g$, an average major axial diameter of 0.128 $\mu m$, a standard deviation $\sigma$ of 0.0248 $\mu m$, a particle size distribution (standard deviation/average major axial diameter) of 0.194, an average minor axial diameter of 0.0149 $\mu m$ and an aspect ratio (average major axial diameter/average minor axial diameter) of 8.6:1. Further, the obtained goethite particles contained no dendritic particles, and had $D_{020}$ of 17.6 nm, $D_{110}$ of 11.4 nm and a ratio of $D_{020}/D_{110}$ of 1.54:1. The obtained goethite particles were composed of 48.2 % by weight of Fe, 5.08 % by weight of cobalt and 2.32 % by weight of aluminum. Further, it was determined that the cobalt content was 10 atm % (calculated as Co) based on whole Fe, and the aluminum content was 10 atm % (calculated as Al) based on whole Fe.

Reference Example 1:

The press cake containing 1,000 g (8.68 mol as Fe) of the spindle-shaped goethite particles obtained in Example 1 was sufficiently dispersed in 40 liters of water. 2 liters of an aqueous yttrium nitrate solution containing 266 g of yttrium nitrate hexahydrate (equivalent to 8 atm % (calculated as Y) based on whole Fe in the goethite particles) and 4 liters of an aqueous cobalt acetate solution containing 435 g of cobalt acetate tetrahydrate were added to the obtained dispersion, and then stirred. Further, after a 25.0 wt% aqueous sodium carbonate solution as a precipitating agent was added to adjust the pH of the dispersion to 9.5, the resultant dispersion was washed with water using a filter press. The obtained press cake was extrusion-molded using a compression molding machine equipped with a mold plate having an orifice diameter of 3 mm, followed by drying at 120°C, thereby obtaining goethite particles coated with the yttrium compound and the cobalt compound. The cobalt content in the obtained goethite particles was 25 atm % (calculated as Co) based on whole Fe; the aluminum content thereof was 10 atm % (calculated as Al) based on whole Fe; and the yttrium content thereof was 8 atm % (calculated as Y) based on whole Fe. Further, it was determined that yttrium existed only in an outer layer portion of each particle.

The spindle-shaped goethite particles coated with the yttrium compound and the cobalt compound were heat-dehydrated in air at 600°C, thereby producing spindle-shaped hematite particles having an outer layer composed of the yttrium compound and the cobalt compound.

100 g of the thus obtained spindle-shaped hematite particles having the outer layer composed of the yttrium compound and the cobalt compound were charged into a fixed bed reducing apparatus having an inner diameter of 72 mm. While a hydrogen ($H_2$) gas was passed through the reducing apparatus at a flow rate of 35 liter/min, the spindle-shaped hematite particles were heat-reduced at 600°C. After the hydrogen gas was replaced with a nitrogen gas, the particles were cooled to 80°C, and then the oxygen partial pressure in the reducing apparatus was gradually increased by passing a water vapor therethrough until the oxygen content therein reached the same content as in air, thereby forming a stable oxide film on the surface of each particle.

As recognized from the transmission electron micrograph shown in Fig. 2, the obtained spindle-shaped magnetic iron-based alloy particles and further containing cobalt, aluminum and yttrium, had an average major axial diameter of 0.102 $\mu m$, a standard deviation $\sigma$ of 0.0157 $\mu m$, a particle size distribution (standard deviation/average major axial diameter) of 0.154, an average minor axial diameter of 0.0128 $\mu m$, an aspect ratio (average major axial diameter:average minor axial diameter) of 8.0:1, a BET specific surface area of 48.2 $m^2$/g and an X-ray crystallite size $D_{110}$ of 15.7 nm. In addition, the spindle-shaped magnetic iron-based alloy particles had a spindle shape and a uniform particle size, and contained much less amount of dendritic particles. Further, the cobalt content in the particles was 25 atm % (calculated as Co) based on whole Fe; the aluminum content was 10 atm % (calculated as Al) based on whole Fe; and the yttrium content was 8 atm % (calculated as Y) based on whole Fe. As to the magnetic properties of the obtained magnetic iron-based alloy particles, the coercive force thereof was as high as 2,274 Oe; the saturation magnetization σs was 141.3 emu/g; the squareness (σr/σs) was 0.541; and the oxidation stability △σs of the saturation magnetization was 3.2 % (as an absolute value) (measured value: -3.2 %). Further, as to sheet magnetic characteristics, the sheet coercive force Hc was 2,326 Oe; the sheet squareness (Br/Bm) was 0.868; the sheet SFD was 0.354; and △Bm was 2.0 %.

Examples 2 to 6 and Comparative Examples 1 to 11:

〈Production of spindle-shaped goethite particles〉

The same procedure as defined in Example 1 was conducted except that production conditions of the spindle-shaped goethite particles were varied as shown in Table 1, thereby obtaining spindle-shaped goethite particles. Various properties of the obtained spindle-shaped goethite particles are shown in Table 2.

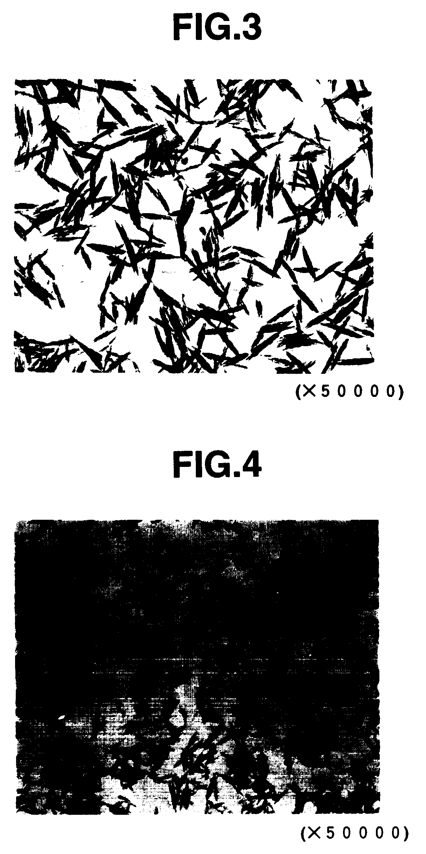

In Fig. 3, there is shown an electron micrograph of a particle structure of the goethite particles obtained in Example 3.
In Fig. 4, there is shown an electron micrograph of a particle structure of the goethite particles obtained in Comparative Example 3.

Comparative Example 4:

The same procedure as defined in Example 1 was conducted except that the cobalt compound to be added upon the production reaction of goethite particles was added to the aqueous ferrous salt solution, and the aluminum compound was added immediately after the passage of the aging period, thereby producing goethite particles.
It was determined that the obtained goethite particles were ultrafine particles.

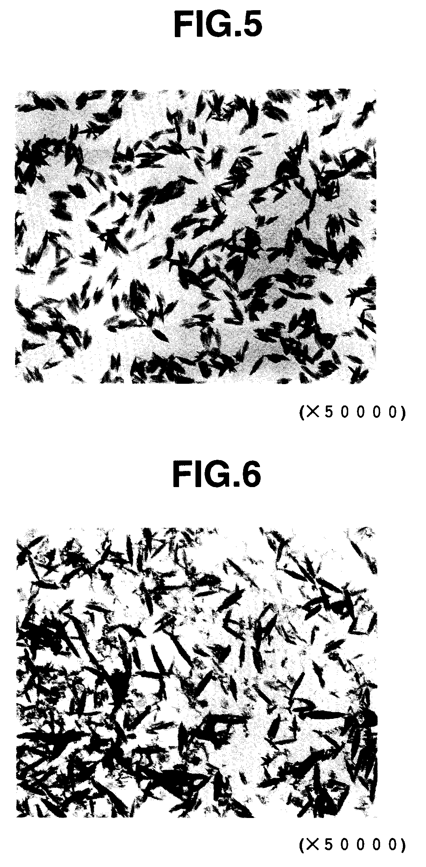

In Fig. 5, there is shown an electron micrograph of a particle structure of the goethite particles obtained in Comparative Example 4.

Comparative Example 5:

The same procedure as defined in Example 1 was conducted except that both the cobalt compound to be added upon the production reaction of goethite particles and the aluminum compound were added immediately after the passage of the aging period, thereby producing goethite particles.
It was determined that the obtained goethite particles were ultrafine particles.

Comparative Example 6:

The same procedure as defined in Example 1 was conducted except that the cobalt compound to be added upon the production reaction of goethite particles was added during the 5-hour aging period, more specifically 3 hours after initiation of the aging treatment, thereby producing goethite particles.
It was determined that the obtained goethite particles contained fine impurities, and a goethite single phase was not obtained.
In Fig. 6, there is shown an electron micrograph of a particle structure of the goethite particles obtained in Comparative Example 6.

Table 1

| Examples and Comparative Examples | Production of spindle-shaped goethite particles | | | | |
| | Mixed aqueous alkali solution | | | | |
| | Aqueous alkali carbonate solution | | Aqueous alkali hydroxide solution | | Alkali ratio: 1/2 · alkali hydroxide /whole alkali (%) |
| | Kind | Amount used (mol) | Kind | Amount used (mol) | |
| Example 2 | Na$_2$CO$_3$ | 25 | NaOH | 18 | 26.5 |
| · Example 3 | Na$_2$CO$_3$ | 25 | NaOH | 18 | 26.5 |
| Example 4 | Na$_2$CO$_3$ | 25 | NaOH | 18 | 26.5 |
| Example 5 | Na$_2$CO$_3$ | 25 | NaOH | 18 | 26.5 |
| Example 6 | Na$_2$CO$_3$ | 25 | NaOH | 18 | 26.5 |
| Comp. Ex. 1 | Na$_2$CO$_3$ | 25 | NaOH | 18 | 26.5 |
| Comp. Ex. 2 | Na$_2$CO$_3$ | 25 | NaOH | 18 | 26.5 |
| Comp. Ex. 3 | Na$_2$CO$_3$ | 25 | NaOH | 18 | 26.5 |
| Comp. Ex. 4 | Na$_2$CO$_3$ | 25 | NaOH | 18 | 26.5 |
| Comp. Ex. 5 | Na$_2$CO$_3$ | 25 | NaOH | 18 | 26.5 |
| Comp. Ex. 6 | Na$_2$CO$_3$ | 25 | NaOH | 18 | 26.5 |
| Comp. Ex. 7 | Na$_2$CO$_3$ | 25 | NaOH | 18 | 26.5 |
| Comp. Ex. 8 | Na$_2$CO$_3$ | 25 | NaOH | 18 | 26.5 |
| Comp. Ex. 9 | Na$_2$CO$_3$ | 25 | NaOH | 18 | 26.5 |
| Comp. Ex. 10 | Na$_2$CO$_3$ | 25 | NaOH | 18 | 26.5 |
| Comp. Ex. 11 | Na$_2$CO$_3$ | 25 | NaOH | 18 | 26.5 |

Table 1 (continued)

| Examples and Comparative Examples | Production of spindle-shaped goethite particles | | | | | |
|---|---|---|---|---|---|---|
| | Aqueous ferrous salt solution | | Equi-valent ratio: | Aging | | |
| | Kind | Amount used (mol) | whole alkali /Fe$^{2+}$ note 1) | Tempe-rature (°C) | Time (hr) | Linear velocity of nitrogen passed (cm/s) |
| Example 2 | FeSO$_4$ | 20 | 1.70 | 47 | 5 | 2.21 |
| Example 3 | FeSO$_4$ | 20 | 1.70 | 47 | 5 | 2.21 |
| Example 4 | FeSO$_4$ | 20 | 1.70 | 47 | 5 | 2.21 |
| Example 5 | FeSO$_4$ | 20 | 1.70 | 47 | 5 | 2.21 |
| Example 6 | FeSO$_4$ | 20 | 1.70 | 47 | 5 | 2.21 |
| Comp. Ex. 1 | FeSO$_4$ | 20 | 1.70 | 47 | 5 | 2.21 |
| Comp. Ex. 2 | FeSO$_4$ | 20 | 1.70 | 47 | 5 | 2.21 |
| Comp. Ex. 3 | FeSO$_4$ | 20 | 1.70 | 47 | 5 | 2.21 |
| Comp. Ex. 4 | FeSO$_4$ | 20 | 1.70 | 47 | 5 | 2.21 |
| Comp. Ex. 5 | FeSO$_4$ | 20 | 1.70 | 47 | 5 | 2.21 |
| Comp. Ex. 6 | FeSO$_4$ | 20 | 1.70 | 47 | 5 | 2.21 |
| Comp. Ex. 7 | FeSO$_4$ | 20 | 1.70 | 47 | 5 | 2.21 |
| Comp. Ex. 8 | FeSO$_4$ | 20 | 1.70 | 47 | 5 | 2.21 |
| Comp. Ex. 9 | FeSO$_4$ | 20 | 1.70 | 47 | 5 | 2.21 |
| Comp. Ex. 10 | FeSO$_4$ | 20 | 1.70 | 47 | 5 | 2.21 |
| Comp. Ex. 11 | FeSO$_4$ | 20 | 1.70 | 47 | 5 | 2.21 |

Note 1: calculated assuming that the whole alkali was composed of (1/2 x alkali hydroxide + alkali carbonate).

Table 1 (continued)

| Examples and Comparative Examples | Production of spindle-shaped goethite particles | | |
|---|---|---|---|
| | Aluminum compound | | |
| | Kind | Amount added (mol) | Timing of addition |
| Example 2 | Aluminum sulfate | 1.0 | Aqueous ferrous salt solution |
| Example 3 | Aluminum sulfate | 0.6 | Aqueous ferrous salt solution |
| Example 4 | Aluminum sulfate | 0.6 | Aqueous ferrous salt solution |
| Example 5 | Aluminum sulfate | 0.6 | Aqueous ferrous salt solution |
| Example 6 | Sodium aluminate | 2.0 | Aqueous ferrous salt solution |
| Comp. Ex. 1 | Aluminum sulfate | 3.0 | Aqueous ferrous salt solution |
| Comp. Ex. 2 | Aluminum sulfate | 1.8 | Aqueous ferrous salt solution |
| Comp. Ex. 3 | Aluminum sulfate | 2.4 | Aqueous ferrous salt solution |
| Comp. Ex. 4 | Aluminum sulfate | 2.0 | After the passage of aging period |
| Comp. Ex. 5 | Aluminum sulfate | 2.0 | After the passage of aging period |
| Comp. Ex. 6 | Aluminum sulfate | 2.0 | Aqueous ferrous salt solution |
| Comp. Ex. 7 | Aluminum sulfate | 2.0 | Aqueous ferrous salt solution |
| Comp. Ex. 8 | Aluminum sulfate | 2.0 | Aqueous ferrous salt solution |
| Comp. Ex. 9 | Aluminum sulfate | 1.8 | Aqueous ferrous salt solution |
| Comp. Ex. 10 | Aluminum sulfate | 2.4 | Aqueous ferrous salt solution |
| Comp. Ex. 11 | Aluminum sulfate | 0.2 | Aqueous ferrous salt solution |

Table 1 (continued)

| Examples and Comparative Examples | Production of spindle-shaped goethite particles | | |
|---|---|---|---|
| | Cobalt compound | | |
| | Kind | Amount added (mol) | Timing of addition |
| Example 2 | Cobalt sulfate | 3.0 | After the passage of aging period |
| Example 3 | Cobalt sulfate | 0.6 | After the passage of aging period |
| Example 4 | Cobalt sulfate | 1.8 | After the passage of aging period |
| Example 5 | Cobalt sulfate | 3.6 | After the passage of aging period |
| Example 6 | Cobalt sulfate | 2.0 | After the passage of aging period |
| Comp. Ex. 1 | Cobalt sulfate | 1.8 | After the passage of aging period |
| Comp. Ex. 2 | Cobalt sulfate | 3.6 | After the passage of aging period |
| Comp. Ex. 3 | Cobalt sulfate | 3.6 | After the passage of aging period |
| Comp. Ex. 4 | Cobalt sulfate | 2.0 | Aqueous ferrous salt solution |
| Comp. Ex. 5 | Cobalt sulfate | 2.0 | After the passage of aging period |
| Comp. Ex. 6 | Cobalt sulfate | 2.0 | During aging period, i.e., 3 hours after initiation of aging |
| Comp. Ex. 7 | Cobalt sulfate | 2.0 | During oxidation reaction |
| Comp. Ex. 8 | Cobalt sulfate | 2.0 | Aqueous ferrous salt solution |
| Comp. Ex. 9 | Cobalt sulfate | 0.6 | After the passage of aging period |
| Comp. Ex. 10 | Cobalt sulfate | 1.2 | After the passage of aging period |
| Comp. Ex. 11 | Cobalt sulfate | 5.0 | After the passage of aging period |

Table 1 (continued)

| Examples and Comparative Examples | Production of spindle-shaped goethite particles | |
| --- | --- | --- |
| | Linear velocity of air passed (cm/s) | Temperature (°C) |
| Example 2 | 1.99 | 47 |
| Example 3 | 1.99 | 47 |
| Example 4 | 1.54 | 47 |
| Example 5 | 1.11 | 47 |
| Example 6 | 1.99 | 47 |
| Comp. Ex. 1 | 1.99 | 47 |
| Comp. Ex. 2 | 1.99 | 47 |
| Comp. Ex. 3 | 1.99 | 47 |
| Comp. Ex. 4 | 1.99 | 47 |
| Comp. Ex. 5 | 1.99 | 47 |
| Comp. Ex. 6 | 1.99 | 47 |
| Comp. Ex. 7 | 1.99 | 47 |
| Comp. Ex. 8 | 1.99 | 47 |
| Comp. Ex. 9 | 1.99 | 47 |
| Comp. Ex. 10 | 1.99 | 47 |
| Comp. Ex. 11 | 1.11 | 47 |

Table 2

| Examples and Comparative Examples | Properties of goethite particles | |
|---|---|---|
| | Kind | Shape |
| Example 2 | Goethite particles | Spindle-shaped |
| Example 3 | Goethite particles | Spindle-shaped |
| Example 4 | Goethite particles | Spindle-shaped |
| Example 5 | Goethite particles | Spindle-shaped |
| Example 6 | Goethite particles | Spindle-shaped |
| Comp. Ex. 1 | Goethite particles containing granular particles | Spindle-shaped |
| Comp. Ex. 2 | Goethite particles containing fine impurities | Spindle-shaped |
| Comp. Ex. 3 | Goethite particles containing fine impurities | Spindle-shaped |
| Comp. Ex. 4 | Goethite particles | Spindle-shaped |
| Comp. Ex. 5 | Goethite particles | Spindle-shaped |
| Comp. Ex. 6 | Goethite particles containing fine impurities | Spindle-shaped |
| Comp. Ex. 7 | Goethite particles containing plate-like impurities | Spindle-shaped |
| Comp. Ex. 8 | Goethite particles | Spindle-shaped |
| Comp. Ex. 9 | Goethite particles containing granular particles | Spindle-shaped |
| Comp. Ex. 10 | Goethite particles containing granular particles | Spindle-shaped |
| Comp. Ex. 11 | Goethite particles containing fine impurities | Spindle-shaped |

Table 2 (continued)

| Examples and Comparative Examples | Properties of goethite particles | | |
|---|---|---|---|
| | Average major axial diameter: l (μm) | Standard deviation: σ | particle size distribution: σ/l |
| Example 2 | 0.120 | 0.0235 | 0.196 |
| Example 3 | 0.145 | 0.0264 | 0.182 |
| Example 4 | 0.132 | 0.0260 | 0.197 |
| Example 5 | 0.118 | 0.0231 | 0.196 |
| Example 6 | 0.131 | 0.0239 | 0.182 |
| Comp. Ex. 1 | – | – | – |
| Comp. Ex. 2 | – | – | – |
| Comp. Ex. 3 | – | – | – |
| Comp. Ex. 4 | 0.102 | 0.0226 | 0.222 |
| Comp. Ex. 5 | 0.042 | 0.0098 | 0.233 |
| Comp. Ex. 6 | – | – | – |
| Comp. Ex. 7 | – | – | – |
| Comp. Ex. 8 | 0.212 | 0.0563 | 0.266 |
| Comp. Ex. 9 | – | – | – |
| Comp. Ex. 10 | – | – | – |
| Comp. Ex. 11 | – | – | – |

EP 0 940 369 A2

Table 2 (continued)

| Examples and Comparative Examples | Properties of goethite particles | | |
|---|---|---|---|
| | Average minor axial diameter ($\mu$m) | Aspect ratio | BET specific surface area ($m^2$/g) |
| Example 2 | 0.0141 | 8.5:1 | 131.0 |
| Example 3 | 0.0173 | 8.4:1 | 85.9 |
| Example 4 | 0.0157 | 8.4:1 | 95.7 |
| Example 5 | 0.0142 | 8.3:1 | 129.0 |
| Example 6 | 0.0154 | 8.5:1 | 92.3 |
| Comp. Ex. 1 | − | − | 142.7 |
| Comp. Ex. 2 | − | − | 152.7 |
| Comp. Ex. 3 | − | − | 174.9 |
| Comp. Ex. 4 | 0.0212 | 4.8:1 | 215.7 |
| Comp. Ex. 5 | 0.0072 | 5.8:1 | 267.3 |
| Comp. Ex. 6 | − | − | 232.7 |
| Comp. Ex. 7 | − | − | 172.1 |
| Comp. Ex. 8 | 0.0462 | 4.6:1 | 65.6 |
| Comp. Ex. 9 | − | − | 132.0 |
| Comp. Ex. 10 | − | − | 152.3 |
| Comp. Ex. 11 | − | − | 264.4 |

20

Table 2 (continued)

| Examples and Comparative Examples | Properties of goethite particles | | | | |
|---|---|---|---|---|---|
| | Co content: Co/Fe (atm %) | Al content: Al/Fe (atm %) | X-ray crystallite size | | |
| | | | $D_{020}$ (nm) | $D_{110}$ (nm) | $D_{020}/D_{110}$ |
| Example 2 | 15.0 | 5.0 | 17.1 | 10.3 | 1.66 |
| Example 3 | 3.0 | 3.0 | 18.8 | 12.6 | 1.49 |
| Example 4 | 9.0 | 3.0 | 18.2 | 11.0 | 1.65 |
| Example 5 | 18.0 | 3.0 | 19.1 | 10.8 | 1.77 |
| Example 6 | 10.0 | 10.0 | 17.9 | 12.1 | 1.48 |
| Comp. Ex. 1 | 9.0 | 15.0 | – | – | – |
| Comp. Ex. 2 | 18.0 | 9.0 | – | – | – |
| Comp. Ex. 3 | 18.0 | 12.0 | – | – | – |
| Comp. Ex. 4 | 10.0 | 10.0 | 8.3 | 7.2 | 1.15 |
| Comp. Ex. 5 | 10.0 | 10.0 | 7.2 | 6.2 | 1.16 |
| Comp. Ex. 6 | 10.0 | 10.0 | – | – | – |
| Comp. Ex. 7 | 10.0 | 10.0 | – | – | – |
| Comp. Ex. 8 | 10.0 | 10.0 | 23.4 | 10.9 | 2.15 |
| Comp. Ex. 9 | 3.0 | 9.0 | – | – | – |
| Comp. Ex. 10 | 6.0 | 12.0 | – | – | – |
| Comp. Ex. 11 | 25.0 | 3.0 | – | – | – |

Reference Examples 2 to 6:

(Production of spindle-shaped magnetic iron-based alloy particles)

The same procedure as defined in Reference Example 1 was conducted except that kind of particles to be treated, kind and amount of the coating material used for the anti-sintering treatment, the heating temperature and the reducing temperature upon the heat-reduction step were varied, thereby producing magnetic iron-based alloy particles. Heat-dehydration conditions and heat-reduction conditions are shown in Table 3, and various properties of the obtained magnetic iron-based alloy particles are shown in Table 4.

Table 3

| Reference Examples | Kind of starting goethite particles | Production conditions of magnetic iron-based alloy particles | | | |
|---|---|---|---|---|---|
| | | Anti-sintering agent | | | |
| | | Rare earth compound | | Other compound | |
| | | Kind | Amount added R/Fe (mol%) | Kind | Amount added M/Fe (mol%) |
| Reference Example 2 | Example 2 | Neodymium nitrate | 5.0 | Cobalt sulfate | 5.0 |
| Reference Example 3 | Example 3 | Neodymium nitrate | 3.0 | Cobalt sulfate Aluminum sulfate | 7.0 7.0 |
| Reference Example 4 | Com. Ex.4 | Yttrium nitrate | 8.0 | Cobalt sulfate | 15.0 |
| Reference Example 5 | Com. Ex.5 | Yttrium nitrate | 8.0 | Cobalt sulfate | 15.0 |
| Reference Example 6 | Com. Ex.8 | Yttrium nitrate | 8.0 | Cobalt sulfate | 15.0 |

Table 3 (continued)

| Reference Examples | Production conditions of magnetic iron-based alloy particles | | |
|---|---|---|---|
| | Heat-treatment | | Heat-reduction |
| | Heating temperature (°C) | Atmosphere | Temperature (°C) |
| Reference Example 2 | 650 | Air | 500 |
| Reference Example 3 | 700 | Air | 600 |
| Reference Example 4 | 600 | Air | 600 |
| Reference Example 5 | 600 | Air | 600 |
| Reference Example 6 | 600 | Air | 600 |

Table 4

| Reference Examples | Properties of magnetic iron-based alloy particles | | | |
| | Shape | Average major axial diameter: l (μm) | Standard deviation: σ | particle size distribution: σ/l |
|---|---|---|---|---|
| Reference Example 2 | Spindle -shaped | 0.098 | 0.0147 | 0.150 |
| Reference Example 3 | Spindle -shaped | 0.121 | 0.0196 | 0.162 |
| Reference Example 4 | Spindle -shaped | 0.075 | 0.0167 | 0.223 |
| Reference Example 5 | Spindle -shaped | 0.038 | 0.0123 | 0.324 |
| Reference Example 6 | Spindle -shaped | 0.198 | 0.0463 | 0.234 |

Table 4 (continued)

| Reference Examples | Properties of magnetic iron-based alloy particles | | | |
|---|---|---|---|---|
| | Average minor axial diameter ($\mu$m) | Aspect ratio | BET specific surface area ($m^2/g$) | X-ray crystallite size ($D_{110}$) (nm) |
| Reference Example 2 | 0.0124 | 7.9:1 | 49.1 | 16.2 |
| Reference Example 3 | 0.0155 | 7.8:1 | 40.6 | 15.9 |
| Reference Example 4 | 0.0188 | 4.0:1 | 63.8 | 16.2 |
| Reference Example 5 | 0.0087 | 4.4:1 | 74.5 | 13.2 |
| Reference Example 6 | 0.0492 | 4.0:1 | 65.5 | 18.4 |

Table 4 (continued)

| Reference Examples | Properties of magnetic iron-based alloy particles | | |
|---|---|---|---|
| | Co content: Co/Fe (atm %) | Al content: Al/Fe (atm %) | Content of rare earth element: Re/Fe (atm %) |
| Reference Example 2 | 20 | 5 | 5 |
| Reference Example 3 | 10 | 10 | 3 |
| Reference Example 4 | 25 | 10 | 8 |
| Reference Example 5 | 25 | 10 | 8 |
| Reference Example 6 | 25 | 10 | 8 |

Table 4 (continued)

| Reference Examples | Properties of magnetic iron-based alloy particles | | | |
|---|---|---|---|---|
| | Coercive force Hc (Oe) | Saturation magnetization: $\sigma s$ (emu/g) | Squareness : $\sigma r / \sigma s$ | $\Delta \sigma s$ (%) |
| Reference Example 2 | 2,180 | 145.6 | 0.540 | 4.5 |
| Reference Example 3 | 1,921 | 140.6 | 0.535 | 4.6 |
| Reference Example 4 | 1,527 | 112.4 | 0.486 | 12.6 |
| Reference Example 5 | 1,621 | 102.1 | 0.489 | 16.3 |
| Reference Example 6 | 1,426 | 118.2 | 0.483 | 13.8 |

Table 4 (continued)

| Reference Examples | Sheet characteristics | | | |
|---|---|---|---|---|
| | Coercive force Hc (Oe) | Squareness (Br/Bm) | SFD | $\Delta$Bm (%) |
| Reference Example 2 | 2,223 | 0.862 | 0.344 | 3.3 |
| Reference Example 3 | 1,970 | 0.865 | 0.388 | 3.9 |
| Reference Example 4 | 1,564 | 0.766 | 0.693 | 11.3 |
| Reference Example 5 | 1,664 | 0.781 | 0.683 | 14.7 |
| Reference Example 6 | 1,487 | 0.776 | 0.654 | 12.3 |

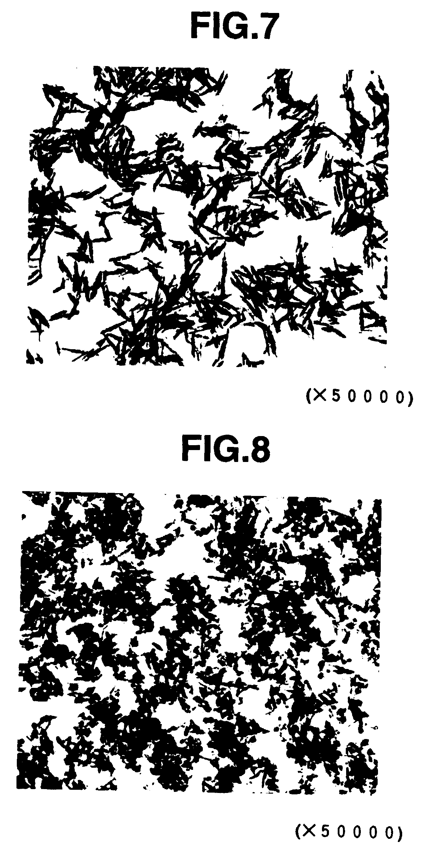

In Fig. 7, there is shown a transmission electron micrograph of a particle structure of the magnetic iron-based alloy particles which were obtained in Reference Example 3.

Further, in Fig. 8, there is shown a transmission electron micrograph of a particle structure of the magnetic iron-based alloy particles which were obtained in Reference Example 4.

## Claims

1. Spindle-shaped goethite particles which uniformly contain:

   (i) from 1 to 20 atm % of cobalt, calculated as Co, based on the total amount of Fe;
   (ii) from 1 to 15 atm % of aluminum, calculated as Al, based on the total amount of Fe; and which have:
   (iii) an X-ray crystallite size ratio ($D_{020}:D_{110}$) of from 1.0:1 to less than 2.0:1;
   (iv) an average major axial diameter of from 0.05 to 0.20 $\mu$m;
   (v) an average minor axial diameter of from 0.010 to 0.020 $\mu$m; and
   (vi) an average aspect ratio (average major axial diameter:average minor axial diameter) of from 4:1 to 10:1.

2. Particles according to claim 1, wherein the total amount of cobalt and aluminum contained in said spindle-shaped goethite particles is from 2 to 23 atm % (calculated as a sum of Co and Al) based on the total amount of Fe, and the cobalt content is not less than the aluminum content.

3. Particles according to claim 1 or 2, which uniformly contain:

   (i) from 3 to 18 atm % of cobalt, calculated as Co, based on the total amount of Fe,
   (ii) from 3 to 15 atm % of aluminum, calculated as Al, based on the total amount of Fe;
   and which have:
   (iii) an X-ray crystallite size ratio ($D_{020}:D_{110}$) of from 1.2:1 to 1.8:1;
   (iv) an average major axial diameter of from 0.05 to 0.18 $\mu$m,
   (v) an average minor axial diameter of from 0.010 to 0.018 $\mu$m; and
   (vi) an average aspect ratio (average major axial diameter/average minor axial diameter) of from 5:1 to 9:1;

the total amount of cobalt and aluminum contained in said particles being from 6 to 21 atm %, calculated as a sum of Co and Al, based on the total amount of Fe and the cobalt content being not less than the aluminum content.

4. Particles according to any one of the preceding claims wherein the BET specific surface area is from 80 to 200 $m^2$/g.

5. Particles according to claim 4 wherein the BET specific surface area is from 90 to 190 $m^2$/g.

6. A process for producing spindle-shaped goethite particles, comprising:

(a) reacting a mixed aqueous alkali solution comprising an aqueous alkali carbonate solution and an aqueous alkali hydroxide solution, with an aqueous ferrous salt solution, thereby obtaining a water suspension containing a ferrous iron-containing precipitate; an aluminum compound being added in an amount of from 1 to 15 atm %, calculated as Al, based on the total amount of Fe in the water suspension, either to the aqueous ferrous salt solution when a normal salt of aluminum is used as the aluminum compound or to the mixed aqueous alkali solution when an aluminate is used as the aluminum compound;
(b) aging the water suspension for 30 to 300 minutes in a non-oxidative atmosphere;
(c) after the aging step (b), adding a cobalt compound in an amount of from 1 to 20 atm %, calculated as Co, based on the total amount of Fe in the water suspension, to the aged water suspension; and
(d) passing a molecular oxygen-containing gas through the aged water suspension to which the cobalt compound has been added so as to allow oxidation to occur, thereby obtaining spindle-shaped goethite particles.

7. A process according to claim 6 wherein the aging step (b) is conducted at a temperature of from 40 to 80°C.

8. A process according to claim 6 or 7 wherein the aging step (b) is conducted by passing an inert gas or a reducing gas through a reactor containing the water suspension.

9. A process according to any one of claims 6 to 8 wherein the oxidation step (d) is conducted by passing a molecular oxygen-containing gas at a linear velocity of from 0.5 to 3.5 cm/sec through the aged water suspension to which the cobalt compound has been added.

10. A process according to claim 9 wherein the linear velocity is from 1.0 to 3.0 cm/sec.

# FIG.1

(×50000)

# FIG.2

(×50000)

# FIG.3

(×50000)

# FIG.4

(×50000)

# FIG.5

(×50000)

# FIG.6

(×50000)

# FIG.7

(×50000)

# FIG.8

(×50000)